# EUROPÄISCHE PATENTANMELDUNG

(11) **EP 1 321 789 A2**
(43) Veröffentlichungstag der Anmeldung: **25.06.2003**
(21) Anmeldenummer: 02025789.5
(22) Anmeldetag: 16.11.2002
(51) Int. Cl.: G02B 6/42

(54) **System zur Abbildung einer kleinen Lichtquelle**

(30) Priorität: 05.12.2001 AT 19052001
(71) Anmelder: Photonic Optische Geräte Ges.m.b.H. & Co.KG, 1160 Wien (AT)
(72) Erfinder: Zehetner, Helmut, 2201 Gerasdorf (AT)
(74) Vertreter: Révy von Belvárd, Peter

(57) **Zusammenfassung**

Ein System zur Abbildung einer kleinen Lichtquelle (1), wie eine Kurzbogenlampe, insbesondere mit hoher numerischer Apertur, über einen sphärischen, konkaven Reflektor (2) auf die Eintrittsfläche eines Lichtleiters (3) oder eines Lichtleiterfaserbündels, wobei der Reflektor (2) asymmetrisch zur Lichtquelle (1), die Lichtquelle (1) in größerem Abstand von der Symmetrieachse (4) des Reflektors (2) angeordnet ist und im Strahlengang der Lichtquelle (1) zum sphärischen, konkaven Reflektor (2) eine kreiszylindrische Linse (5) mit positiver Brechkraft angeordnet ist.

## Beschreibung

Die Erfindung betrifft ein System zur Abbildung einer kleinen Lichtquelle, wie eine Kurzbogenlampe, insbesondere mit hoher numerischer Apertur von z.B. ≥ 0.5, über einen sphärischen, konkaven Reflektor auf die Eintrittsfläche eines Lichtleiters oder eines Lichtleiterfaserbündels, wobei der Reflektor asymmetrisch zur Lichtquelle und die Lichtquelle in größerem Winkelabstand, z.B. von mindestens 20°, von der Symmetrieachse des Reflektors angeordnet ist.

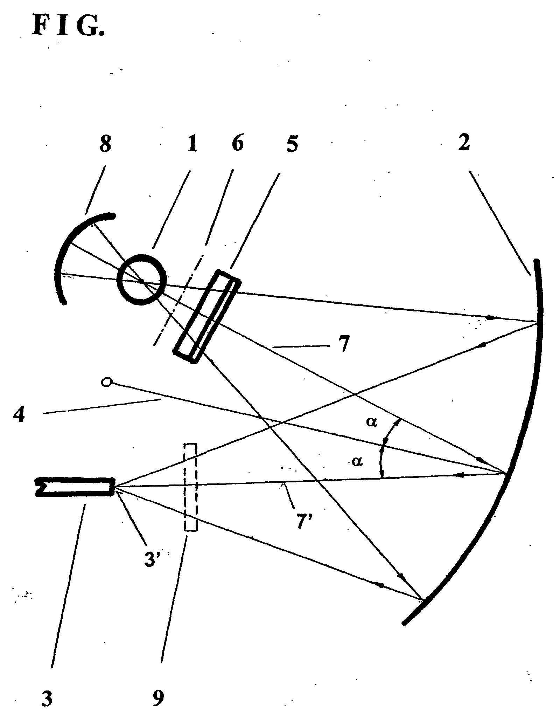

Aus der GB PS 1,114,326 ist ein derartiges Beleuchtungssystem für die Eintrittsfläche von Lichtleitern bekannt. Durch den großen Abstand der Lichtquelle von der Symmetrieachse des sphärischen, konkaven Hohlspiegels, treten optische Verzerrungen bei der Abbildung der Lichtquelle auf der Eintrittsfläche des Lichtleiters auf. Der bei der bei Reflexion am sphärischen, konkaven Spiegel auftretende Astigmatismus reduziert den Wirkungsgrad des Beleuchtungssystems sehr deutlich.

Es ist von wesentlicher Bedeutung zur Erzielung eines möglichst hohen Wirkungsgrades des Systems für die Abbildung einer kleinen Lichtquelle, wie bspw. einer elektrischen Bogenlampe mit z.B. 1 bis 2 rnrn Bogenlänge auf der Lichteintrittsfläche eines Lichtleiters von ebenfalls 1 bis 2 rnrn Durchmesser, einen wenigstens annähernden Abbildungs-Maßstab möglichst 1:1 sicherstellen zu können. Dies macht es erforderlich, optische Abbildungsfehler zu vermeiden.

Mit dem EP 0251.623 wurde für ein Beleuchtungssystem mit sphärischem Hohlspiegel zur Erhöhung des Wirkungsgrades bzw. zur Reduzierung der Abbildungsfehler vorgeschlagen, ein optisches Korrekturglied im Strahlengang zwischen dem sphärischen Hohlspiegel und der Eintrittsfläche des Lichtleiters anzuordnen. Dieser bekannte Vorschlag empfiehlt, die Lichtquelle möglichst nahe der Symmetrieachse des sphärischen Hohlspiegels anzuordnen, um die optischen Verzerrungen grundsätzlich gering zu halten. Dies erfordert aber auch, daß der Lichtleiter mit seiner Eintrittsfläche in diesem nahen Abstand zur Symmetrieachse des Hohlspiegels angeordnet wird.

Dieser Vorschlag gemäß EP 0251.623 weist den großen Nachteil auf, daß durch die Anordnung des Lichtleiters in geringem Abstand zur Lichtquelle die von der Lichtquelle emittierte Hitze den Lichtleiter zerstört. Derartige Lichtleiter, unabhängig ob diese als Einzelfaser oder als Faserbündel ausgebildet sind, sind sehr teuer. Wird ein derartiges Beleuchtungssystem beispielsweise für medizinische Endoskope verwendet, so ist höchste Zuverlässigkeit eine grundsätzliche Voraussetzung.

Es ist Aufgabe der Erfindung die Nachteile der bekannten Vorschläge zu vermeiden. Gemäß der Erfindung wird daher bei einem System der eingangs erwähnten Art vorgeschlagen, daß im Strahlengang der Lichtquelle zum sphärischen, konkaven Reflektor eine zylindrische Linse mit positiver Brechkraft angeordnet ist. Diese Zylinderlinse kann eine asphärische sein, ist aber vorzugsweise eine kreiszylindrische Linse, die mit weniger Aufwand herstellbar ist.

Hiedurch wird in vorteilhaft einfacher Weise erreicht, daß trotz großer numerischer Apertur und großem (Winkel-)Abstand der Lichtquelle von der Symmetrieachse des Reflektors, und somit auch vorteilhaft großem Abstand der Eintrittsfläche des Lichtleiters, von der sehr heißen Lichtquelle eine gut korrigierte Abbildung der Lichtquelle auf der Eintrittsfläche des Lichtleiters erzielt wird und somit der Wirkungsgrad des Systems hoch ist.

In weiterer Ausgestaltung der Erfindung wird vorgeschlagen, daß die Achse der zylindrischen Linse senkrecht zum Hauptstrahl des von der Lichtquelle emittierten Lichtkegels und in der Meridianebene, definiert durch die Symmetrieachse des Reflektors und durch den Hauptstrahl der Lichtquelle, angeordnet ist. Hierdurch wird der Astigmatismus in vorteilhaft einfacher Weise mit geringem baulichen Aufwand bestmöglich korrigiert.

Nach einem weiteren Merkmal der Erfindung wird vorgeschlagen, daß die zylindrische Linse mit einer, vorzugsweise dielektrischen, Wämeschutzbeschichtung versehen ist. Dies ist von Vorteil, da hierdurch die Wärmestrahlung der Lichtquelle, die in Richtung auf den Reflektor emittiert wird, deutlich reduziert wird.

In weiterer Ausgestaltung der Erfindung ist vorgesehen, daß ein zusätzlicher sphärischer, konkaver Reflektor an der der Linse abgewandten Seite der Lichtquelle angeordnet ist, dessen Symmetrieachse in der Richtung der Hauptstrahles der Lichtquelle vorgesehen ist. Hierdurch wird durch die Anordnung eines einfach und kostengünstig herstellbaren Bauteils der Wirkungsgrad des Systems weiter erhöht.

Eine bevorzugte Ausführungsform der Erfindung sieht vor, daß der Reflektor und der zusätzliche Reflektor als Kaltlichtspiegel mit dielektrischer Beschichtung ausgebildet sind, um trotz des hohen Wirkungsgrades des Systems die von der Lichtquelle emittierte Wärmestrahlung in möglichst hohem Ausmaß vom Lichtleiter fernzuhalten.

Die Erfindung ist in der Zeichnung in einer Ausführungsform beispielsweise dargestellt. Die Fig. zeigt schematisch das System zur Abbildung einer kleinen Lichtquelle auf der Eintrittsfläche eines Lichtleiters mit kleinem Durchmesser.

In der Fig. ist mit 1 eine Kurzbogenlampe ausgebildete elektrische Lichtquelle bezeichnet. Eine derartige Lichtquelle 1, beispielsweise eine Xenon-Kurzbogenlampe, emittiert einen Lichtbogen von ca. 1 bis 2 mm, wobei die Größe dieses Lichtpunktes oder Brennfleckes nach oben (weniger bevorzugt) oder unten (<1mm) etwas variieren kann. Die Lichtquelle 1 weist eine hohe numerische Apertur, zweckmäßig von ≥ 0,5, auf. Die elektrischen Einrichtungen zur Zündung und Brennstromversorgung dieser Lichtquelle sind nicht dargestellt, da sie an sich bekannter Natur sein können. Es versteht sich, daß die Erfindung zwar bevorzugt auf Systeme mit einer Bogenlampe gerichtet, aber nicht darauf beschränkt ist.

Die Lichtquelle 1 richtet einen Strahl entlang eines ersten Strahlenganges 7 auf einen als sphärischer, konkaver Spiegel ausgebildeten Reflektor 2, der seinerseits den Lichtbogen der Lichtquelle 1 über einen zweiten Strahlengang 7' auf die Eintrittsfläche 3' des Lichtleiters 3 projiziert. Dieser Reflektor 2 besitzt eine Symmetrieachse 4. Der Lichtleiter 3 mag von jeder an sich bekannten Art sein, besteht aber vorzugsweise aus zumindest einer Lichtleitfaser, gegebenenfalls einem ganzen Bündel solcher Fasern.

Da die, vorzugsweise als Bogenlampe ausgebildete, Lichtquelle 1 sehr große Hitze entwickelt, und Lichtleiter sehr hitzeempfindlich sind, ist die Lichtquelle 1 in möglichst großem (Winkel-)Abstand vom Lichtleiter 3 angeordnet. Die Lichtquelle 1 ist daher im Winkelabstand α von der Symmetrieachse 4 des Reflektors 2 angeordnet, so daß der reflektierte Strahl entlang des Strahlenganges 7' ebenfalls einen Winkelabstand von α annimmt. Auf diese Weise liegt die Lichtquelle 1 vom Lichtleiter 3 in einem Winkelabstand von 2α. Dieser Winkel 2α beträgt vorzugsweise wenigstens 20° (oder α wenigstens 10°), insbesondere wenigstens 30°.

Gemäß der schematisch dargestellten geometrischen Anordnung der Lichtquelle 1, des sphärischen, konkaven Reflektors 2 und des Lichtleiters 3 bzw. seiner Lichteintrittsfläche 3' wird die Lichtquelle 1 im Maßstab von zumindest annähernd 1 : 1 auf der Eintrittsfläche 3' des Lichtleiters 3 abgebildet. Da der Lichtbogen der Lichtquelle klein ist, und im allgemeinen etwa 1 bis 2 mm beträgt, und auch der Lichtleiter 3 einen Durchmesser in dieser Größenordnung oder einen nur unwesentlich größeren Durchmesser aufweist, wird durch diese dar- gestellte Anordnung ein guter Wirkungsgrad des Beleuchtungssystems erreicht.

Der bei der Reflexion der Lichtstrahlen am Reflektor 2 auftretende Astigmatismus reduziert nun aber den möglichen Wirkungsgrad. Zur weitgehenden Korrektur des Astigmatismus ist im Strahlengang zwischen der Lichtquelle 1 und dem Reflektor 2 4 eine zylindrische, insbesondere kreiszylindrische, Linse 5 angeordnet, deren Achse 6 senkrecht zum Hauptstrahl 7 des von der Lichtquelle 1 emittierten Lichtkegels und in der Zeichenebene der Figur liegt. Die Zeichenebene ist auch definiert durch die Symmetrieachse 4 des Reflektors 1 und durch den Hauptstrahl 7 der Lichtquelle 1 (Meridionalebene).

Hierdurch wird der durch die von der Symmetrieachse 4 relativ weit entfernte Anordnung der Lichtquelle 1 entstehende Abbildungsfehler weitestgehend korrigiert und die erforderliche kleine Abbildung der Lichtquelle 1 am Lichtleiter 3 mit sehr hohem Wirkungsgrad erreicht.

Zur weiteren Erhöhung des Wirkungsgrades ist vorzugsweise ein zusätzlicher sphärischer, konkaver Reflektor 8 an der der zylindrischen Linse 5 abgewandten Seite der Lichtquelle 1 angeordnet. Die Symmetrieachse dieses zusätzlichen Reflektors 8 erstreckt sich in der Richtung des Hauptstrahles 7 der Lichtquelle 1. Der Krümmungsmittelpunkt des zusätzlichen Reflektors 8 liegt im Brennfleck bzw. im Lichtbogen der Lichtquelle 1. Wie ersichtlich, ist es bevorzugt, wenn dabei der erste Strahlengang bzw. der Hauptstrahl 7 an derjenigen Stelle auf den Reflektor 2 trifft, durch die die Symmetrieachse 4 hindurch verläuft bzw. dort ihren Ausgangspunkt hat.

Zur Reduzierung der Erhitzung bzw. zur Vermeidung einer Überhitzung des Lichtleiters 3 bzw. seiner Eintrittsfläche 3' sind die Reflektoren 2 und 8 als Hohlspiegel mit dielektrischer Kaltlichtspiegelbeschichtung ausgebildet. Eine weitere Maßnahme könnte darin liegen, entlang der Symmetrieachse 4 ein Hitzeschild, z.B. eine Scheibe mit dielektrischer Beschichtung, aufzustellen, was aber nicht unbedingt bevorzugt ist. Ferner kann die zylindrische Linse 5 ist mit einer als "hot mirror" ausgebildeten dielektrischen Wärmeschutzbeschichtung versehen sein.

Zusätzlich kann, falls erforderlich, zur Reduzierung der auf die Eintrittsfläche 3' des Lichtleiters 3 auftreffenden Hitzestrahlung ein Wärmeschutzfilter 9 im Strahlengang 7' zwischen dem Reflektor 2 und dem Lichtleiter 3 angeordnet werden.

Die Erfindung ist auf das dargestellte Ausfiihrungsbeispiel nicht beschränkt. Als Lichtleiter 3 kann eine Einzelfaser oder ein Faserbündel verwendet werden. Als Werkstoff für den Lichtleiter 3 kann sowohl Glasfaser als auch Kunststoffaser verwendet werden. Als Lichtquelle 1 können elektrische Hochenergie-Lampen verwendet werden, die einen kleinen Lichtbogen bzw. Brennfleck von 1 bis 2, maximal 3mm, generieren, wenn auch Lichtleiter mit einem Durchmesser dieser Dimensionen für die Lichtzuführung an einen Ort oder an ein Objekt verwendet werden müssen.

## Patentansprüche

1. System zur Abbildung einer kleinen Lichtquelle (1), wie eine Kurzbogenlampe, insbesondere mit hoher numerischer Apertur, über einen ersten Strahlengang (7) zu einem sphärischen; konkaven Reflektor (2) von diesem über einen zweiten Strahlengang (7') auf die Eintrittsfläche (3') eines Lichtleiters oder eines Lichtleiterfaserbündels (3), wobei der Reflektor (2) asymmetrisch zur Lichtquelle (1) und die Lichtquelle (1) in größerem Abstand, von z.B. mindestens 10°, von der Symmetrieachse (4) des Reflektors (2) angeordnet ist, **dadurch gekennzeichnet, daß** im ersten Strahlengang (7) der Lichtquelle (1) zum sphärischen, konkaven Reflektor (2) eine zylindrische Linse (5) mit positiver Brechkraft angeordnet ist.

2. System nach Anspruch 1, **dadurch gekennzeichnet, daß** die Apertur wenigstens 0.5 beträgt.

3. System nach Anspruch 1 oder 2, **dadurch gekennzeichnet, daß** die zylindrische Linse (5) eine kreiszylindrische Linse ist.

4. System nach einem der vorhergehenden Ansprüche, **dadurch gekennzeichnet, daß** die Achse (6) der kreiszylindrischen Linse (5) senkrecht zum Hauptstrahl (7) des von der Lichtquelle (1) emittierten Lichtkegels und in der Meridianebene, definiert durch die Symmetrieachse (4) des Reflektors (2) und durch den Hauptstrahl (7) der Lichtquelle (1), angeordnet ist.

5. System nach einem der vorhergehenden Ansprüche, **dadurch gekennzeichnet, daß** der erste Strahlengang (7) am Ausgangpunkt der Symmetrieachse (4) des Reflektors (2) auf dessen Oberfläche trifft.

6. System nach einem der vorhergehenden Ansprüche, **dadurch gekennzeichnet, daß** die zylindrische Linse (5) mit einer, vorzugsweise dielektrischen, Wärmeschutzbeschichtung versehen ist.

7. System nach einem der vorhergehenden Ansprüche, **dadurch gekennzeichnet, daß** ein zusätzlicher sphärischer, konkaver Reflektor (8) an der der Linse (5) abgewandten Seite der Lichtquelle (1) angeordnet ist, dessen Symmetrieachse in der Richtung des Hauptstrahles (7) der Lichtquelle (1) vorgesehen ist.

8. System nach einem der vorhergehenden Ansprüche, **dadurch gekennzeichnet, daß** der Reflektor (2) und/oder der zusätzliche Reflektor (8) als Kaltlichtspiegel mit dielektrischer Beschichtung ausgebildet ist.
